Europäisches Patentamt

(19) **European Patent Office**      (11) Publication number:     **0 017 265**

Office européen des brevets                                        **B1**

(12)               **EUROPEAN PATENT SPECIFICATION**

(45) Date of publication of patent specification: **26.05.82**     (51) Int. Cl.³: **A 01 N 29/02,**
                                                        **A 01 N 25/22**

(21) Application number: **80200142.0**

(22) Date of filing: **19.02.80**

(54) A soil fumigant composition comprising 1.3-dichloropropene and a method of stabilising the same.

(30) Priority: **08.03.79 US 18478**

(43) Date of publication of application:
**15.10.80 Bulletin 80/21**

(45) Publication of the grant of the patent:
**26.05.82 Bulletin 82/21**

(84) Designated Contracting States:
**AT BE CH DE FR GB IT NL**

(56) References cited:
**DE - B - 1 008 045**
**FR - A - 2 092 904**
**GB - A - 590 368**
**US - A - 4 078 089**

**CHEMICAL ABSTRACTS, Vol. 85, No. 13,**
**September 27, 1976, page 160, No. 88531n**
**Columbus, Ohio, USA**

(73). Proprietor: **SHELL INTERNATIONALE RESEARCH MAATSCHAPPIJ B.V.**
**Carel van Bylandtlaan 30**
**NL-2596 HR DEN HAAG (NL)**

(72) Inventor: **Kuderna Jr., Jerome George**
**327 Morton Boulevard**
**Modesto, California 95354 (US)**

(74) Representative: **Rogers, Roy Charles et al,**
**4 York Road**
**London SE1 7NA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A soil composition comprising 1.3-dichloropropene and a method of stabilising the same

This invention is concerned with the stabilisation of soil fumigant compositions consisting of or containing 1,3-dichloropropene. Typical examples of such compositions are the mixtures of the isomeric 1,3-dichloropropenes used as soil fumigants for the control of soil-dwelling nematodes. As supplied commercially such compositions usually contain chlorinated alkanes, such as 1,2-dichloropropane, and other chlorinated alkenes, such as 3,3-dichloropropene; they can also contain other nematicides.

Such commerical compositions are usually stored and transported in metal (usually iron) containers. When in contact with the metal, particularly during storage at high temperatures, such compositions if not stabilised discolour and darken; and they are also corrosive to the metal. These effects are intensified by the small amount of moisture which inevitably is present during the course of routine manufacture, storage and handling.

With increasing awareness of environmental considerations a growing need has arisen in the art for a stabiliser which is not only suitable for the intended purpose, but is substantially non-toxic and non-degradable (or reactable in the composition) to toxic products.

It now has been found that when a small amount of a non-nucleophilic oleophilic aliphatic epoxide is incorporated as a stabiliser in such a composition discoloration of the composition when in contact with iron can be eliminated; corrosivity of the mixture with respect to iron can be significantly reduced, and the above-mentioned effect of water can also be significantly reduced.

Moreover, such epoxides are essentially non-toxic, at least two commercially available classes of such epoxides having been approved by the Environmental Protection Agency and the Food and Drug Administration; they are chemically stable and do not degrade in use to form any noxious material; they are not reactive with air and/or moisture, or any of the components normally present in the compositions to which they are added; they are non-volatile; they are physically compatible with the components of such compositions and with other soil fumigants, such as other halogenated alkanes (e.g. ethylene dibromide), or chloropicrin and with the usual surfactants that may be included in the compositions; and they are readily available commercially at a cost which makes an effective dosage economically feasible.

Surprisingly, it has also been found that these epoxide stabilisers have the unexpected desirable property that, at the temperatures usually encountered during storage and handling of the compositions, the oxirane oxygen content of a composition containing the epoxide is not significantly reduced with passage of time. This is unexpected, for when epichlorohydrin (the conventional stabiliser) is used, the oxirane oxygen content of the composition drops as time passes, and this fact has had to be taken into account when determining the amount of epichlorohydrin to be added at the outset.

1,3-dichloropropene exists in two isomeric (E- and Z-) forms, the Z-isomer being more toxic to nematodes than the E-isomer.

1,3-dichloropropene is manufactured by chlorination of propylene. Consequently, the commercial products ordinarily contain mixtures of the isomers, together with related chlorinated alkane/alkene components, that is one or more chlorinated alkanes and one or more chlorinated alkenes. One commercial product of this kind is sold under the trade mark TELONE II and contains about 92% w of 1,3-dichloropropene (relative proportions of isomers not known) with the remainder believed to be the related chlorinated components. Another commercial product is sold under the trade mark D—D Soil Fumigant and contains about 50% w of an approximately equimolar mixture of the two isomeric 1,3-dichloropropenes, together with substantial amounts of 1,2-dichloropropane and 3,3-dichloropropene, and the related chlorinated components. Such mixtures also have been sold under the trade marks TELONE and VIDDEN D. 1,3-dichloropropene is also sold in combination with other nematicides, such as ethylene dibromide (as DORLONE—1 part of ethylene dibromide/5 parts of 1,3-dichloropropene), chloropicrin (as TELONE C—15 parts of chloropicrin/85 parts of 1,3-dichloropropene; also as NEMEX), and with trichloronitroethylene (GRANDOX Fumigant—1 part of trichloronitroethylene, 1 part of 1,3-dichloropropene, 1 part of other chlorinated hydrocarbons and 1 part of inerts). Stabilisation of such mixtures, as well as other compositions which comprise mixtures of 1,3-dichloropropene with other materials, are within the scope of this invention.

According to this invention a soil fumigant composition comprises 1,3-dichloropropene, optionally together with one or more related chlorinated alkane/alkene components and/or one or more other nematicides, and, as a stabiliser therefor, at least 0.2%, by weight thereof, of a non-nucleophilic, oleophilic aliphatic epoxide.

It will be understood that reference herein to "epoxide" includes, where appropriate, a plurality of epoxides of the kind just defined.

Said stabilisers are generically designated as non-nucleophilic, oleophilic, aliphatic epoxides, the term non-nucleophilic meaning that the epoxide is essentially non-basic in character. These epoxides are substantially soluble in hydrocarbon solvents, essentially insoluble in water, and are the products of the epoxidation of certain high molecular weight mono- and polyolefinically unsaturated compounds which contain at least one aliphatic olefinically unsaturated hydrocarbon chain of at least six carbon

**0 017 265**

atoms. These epoxides are characterised by an oxirane oxygen content of at least four percent and an iodine value of not more than three, preferably below two. In terms of their precursor olefins, the epoxides used in accordance with the invention are those derived from the following classes of olefinic compounds: hydrocarbons, alcohols, esters, ethers, amides and nitriles, wherein the carbon atoms involved in each of the olefinic moieties is bonded to hydrogen or aliphatic carbon. Suitable olefin precursors are those containing at least six carbon atoms, such as the hexenes, heptenes, octenes, diisobutylenes, the undecylenes, pentadienes, and squalene, which can be prepared by cracking natural and synthetic waxes, or by reducing natural fats; propylene trimer and propylene tetramer. Suitable alcohols include those produced by reduction of naturally-occurring vegetable- and animal-derived fatty acids (as described hereinafter) under conditions which preserve the olefinic unsaturation. Further suitable olefin precursors are the olefinically unsaturated acids, such as those present in naturally occurring oils, fats and waxes, including oleic, linoleic, linolenic, ricinoleic, undecylenic, arachidonic and nervonic acids, and mixtures thereof. Suitable ester precursors are the esters of the above mentioned acids with mono- and polyhydric alcohols. The alcohol can be either low or high molecular weight; it may be straight-chain or branched-chain in configuration and may be saturated or olefinically unsaturated. It may also be araliphatic in character. Examples of the alcohols include methanol, ethanol, n- and isopropyl alcohol, the butanols, octanols, 2-ethyhexyl alcohol, lauryl alcohol, cyclohexanol, benzyl alcohol, ethylene glycol, the propylene glycols, polyalkylene glycols, glycerol, pentaerythritol, sorbitol and single alcohols and mixtures obtained from natural fats and waxes, and the olefinically unsaturated alcohol precursors described above. Suitable ester precursors also include the esters of the olefinically unsaturated alcohol precursors described above, with aliphatic, aromatic or araliphatic acids. Examples of such acids include formic, acetic and propionic acids; the isomeric butyric, heptanoic, decanoic, hendecanoic, octadecanoic and like acids; benzoic acid; the olefinically unsaturated acid precursors described above, and their saturated counterparts. Preferably, the acid is aliphatic, and may be low or high molecular weight saturated, or high molecular weight unsaturated, straight-chain or branched-chain in configuration. The nitriles of the olefinically unsaturated acid precursors described above also are suitable precursors, as are the amides of such acids, for example, the amidation products of such acids with, for example, ammonia, dimethylamine, oleylamine, ethylenediamine, benzylamine or cyclohexylamine. Suitable precursors also include ethers and ketones wherein one or both of the organic moieties is one of the olefinically unsaturated high molecular weight aliphatic moieties described above. The most common source of such moieties, either directly, or by conversion, are the glycerides of the naturally-occurring animal and vegetable oils, fats and waxes, such as the vegetable oils, for example, the drying and semi-drying oils and the animal oils, such as those obtained from land-dwelling animals and marine animals. Thus, suitable sources include vegetable oils from soybeans, flax (linseed oil), cotton seed, castor beans, coconuts, olives, rape seed, peanuts, sunflower seeds, safflower seeds, corn, walnuts, hemp seed, sesame seed and tobacco seed, other vegetable oils such as china-wood oil, almond oil, palm oil, tall oil, perilla oil and tung oil, such animal oils as sperm oil, neatsfoot oil, lard oil, tallow, and fish oils, such as herring oil, whale oil, menhaden oil and pilchard oil. Dimers of such materials, such as dimerised linseed oil, dimerised soybean oil, dimerised tung oil and dimerised cottonseed oil also are suitable.

Epoxides of mixtures of olefinically unsaturated compounds obtained from such naturally-occurring materials generally contain saturated compounds which of course do not epoxidise. Such epoxides are entirely suitable for the purpose, and obtain the objectives of this invention.

Because of their desirable physical and biological properties for the purposes of the invention, the preferred epoxides are those obtained by epoxidation of the naturally-occurring mixtures of triglycerides described above. These are readily available at commercially at relatively low cost. Examples of commerical products available under various trade marks or trade names are the following:—

Epoxidised soybean oil:

Paraplex G—60, G—61, G—62  
Drapex 6.8  
Plas-Chek 775  
Admex 711

Estynox 140, 203  
Nuoplaz 849  
Flexol EPO

Epoxidised linseed oil:  
Drapex 10.4  
Plas-Chek 795

Flexol WE

Epoxidised tall oil (esters):  
Flexol EP—8 (2-ethylhexyl epoxy tallate)  
Admex 746 (epoxy tallate)

Epoxidised iso-octyl stearate:  
Estynox 408  
Drapex 3.2, 4.4 (octyl epoxy stearates)

3

Others:
Monoplex S—71 (epoxy oleate ester, average molecular
weight of 380)

Only a minor amount of the epoxide is required to effect stabilisation of the dichloropropene-containing composition. In practical terms an amount which is as little as 0.2 percent by weight of the dichloropropene, or the dichloropropene-containing mixture when other components are present, will have a significant effect. Preferably, stabilisation is effected with the use of 0.5 to 3 percent by weight of the epoxide, and in most cases it will be found desirable to use from about 1 to 2 percent by weight of the epoxide on the same basis. In those instances in which the epoxide stabiliser component comprises a mixture of the herein defined epoxides, the amounts just specified refer, of course, to the mixture.

Two classes of the epoxides: epoxidised linseed oil and epoxidised soybean oil, have been approved by the Environmental Protection Agency and the Food and Drug Administration.

The effectiveness of the defined epoxides as stabilisers for dichloropropene is demonstrated in the following examples:

Example 1
Preliminary accelerated storage tests were conducted as follows:

Glass cylinders were filled approximately half full of a mixture of 1,3-dichloropropenes (D—D Soil Fumigant, a commercial product containing approximately 60% w of mixed 1,3-dichloropropenes, of which about 50% consists of a equimolar mixture of E- and Z- 1,3-disubstituted isomers, together with approximately 26% w of 1,2-dichloropropane, the remainder being essentially other chlorinated hydrocarbons). A strip of bare steel was placed in each container, part of the strip extending into the air space above the surface of the liquid. In some cylinders as much as 0.5% water was added, this concentration substantially exceeding the saturation level at 43.3°C (110°F). In many cylinders, an epoxide was added. The cylinders were sealed and held at 43.3°C (110°F). They were examined after 1, 15 and 30 days for colour changes, rust formation and were analysed for changes in the amounts of the components. The epoxide used was Drapex 10.4, an epoxidised linseed oil marketed by Argus Chemical Company. It is a liquid, containing approximately 9.6% oxirane oxygen, an iodine value of approximately 2.0, about 0.08% water, and a molecular weight of approximately 1000. The dosage of stabiliser, when used: 2 percent of the weight of the dichloropropene mixture. The colour of the mixture was visually evaluated, and reported as follows: Colour gradient: L=light, pale straw colour; A=amber to transparent black; D=dark to black, opaque. Rust formation was visually evaluated and noted as follows: O=none or trace; L=light, mostly metal discoloration; M=moderate (small deposit at the bottom of container); H=heavy deposit on metal surface, plus a sludge at the bottom of the container. The results are summarised in Table 1.

Table 1

| Test No. | H₂O ppm | Head Space | Stabiliser Added | Solution Colour | | | Rust Formation | | |
|---|---|---|---|---|---|---|---|---|---|
| | | | | t=1 | t=15 | t=30 | t=1 | t=15 | t=30 |
| 1—0[a] | 94 | Air | No | L | — | — | O | — | — |
| 1—1 | 5000 | Air | No | L | L | D | L | H | H |
| 1—2 | 5000 | Air | Yes | L | L | L | L | M | M |
| 1—3 | 5000 | N₂ | No | L | A | D | L | M | M |
| 1—4 | 5000 | N₂ | Yes | L | L | L | O | L | M |
| 1—5 | 94 | Air | No | A | D | D | O | O | O |
| 1—6 | 94 | N₂ | No | A | D | D | O | O | O |
| 1—7 | 94 | Air | Yes | L | L | L | O | O | O |
| 1—8 | 94 | N₂ | Yes | L | L | L | O | O | O |

a) Analytical standard, initial condition prior to test.
b) t=Time in days during test period.
The data show that:
1) The epoxide effectively maintained the colour of the product, even in the presence of the added water.

2) The epoxide reduced corrosion, even in the presence of added water, which was present in excess of the saturation concentration (0.15% w at the temperature used). It appears that complete inhibition of rust is probably not possible at such high moisture levels. However, the moderate rust build-up observed probably would not prevent transfer and use of the mixture. At water levels below about 100 ppm, corrosion is not a problem.

4

# 0 017 265

Analyses showed:
a) No significant change in the composition of the mixture occurred.
b) The oxirane content of the mixture at this temperature remained essentially unchanged.

## Example 2

The procedures described in Example 1 were repeated, using Drapex 6.8 and Drapex 10.4 as stabilisers. Drapex 6.8 is an epoxidized soybean oil, containing approximately 7.25% oxirane oxygen, an iodine value of approximately 1.3, about 0.08% water, and a molecular weight of about 1000. The results are summarised in Table 2

### Table 2

| Test No. | $H_2O$ ppm | Head Space | Stabiliser Added—%w | Solution Colour | | Rust Formation | |
|---|---|---|---|---|---|---|---|
| | | | | $t=1^{a)}$ | $t=15$ | $t=1$ | $t=15$ |
| 2—1 | 5000 | Air | D6.8 (2.5%) | L | L | M | M |
| 2—2 | 5000 | $N_2$ | D6.8 (2.5%) | L | L | M | M |
| 2—3 | 94 | Air | D6.8 (2.5%) | L | L | O | O |
| 2—4 | 94 | $N_2$ | D6.8 (2.5%) | L | L | O | O |
| 2—5 | 5000 | Air | D10.4 (1%) | L | L | M | M |
| 2—6 | 5000 | Air | D10.4 (0.5%) | L | L | M | H |

a) t=Time in days

## Example 3

The procedures described in Example 1 were repeated, except that the tests were conducted at 48.8°C (120°F) and 54.5°C (130°F), for 73 days. A different commercial D—D Soil Fumigant mixture (having a similar composition) was used. The epoxides used were Drapex 6.8 and 10.4. The results are summarized in Table 3.

### Table 3

| Test No. | Temperature (°F) | $H_2O$ ppm | Stabiliser Added—%w | Solution Colour | | Rust Formation | |
|---|---|---|---|---|---|---|---|
| | | | | $t=14$ | $t=73$ | $t=14$ | $t=73$ |
| 3—1 | 120 (48.8°C) | 519 | None | D | D | M | M |
| 3—2 | 120 (48.8°C) | 519 | D10.4 (2) | L | D | O | O |
| 3—3 | 120 (48.8°C) | 519 | D10.4 (1) | L | D | O | O |
| 3—4 | 120 (48.8°C) | 519 | D10.4 (0.5) | L | D | O | O |
| 3—5 | 120 (48.8°C) | 519 | D10.4 (0.3) | A | D | O | O |
| 3—6 | 120 (48.8°C) | 519 | D6.8 (2) | A | D | O | O |
| 3—7 | 120 (48.8°C) | 519 | D6.8 (1) | D | D | O | L |
| 3—8 | 120 (48.8°C) | 519 | D6.8 (0.5) | D | D | O | O |
| 3—9 | 120 (48.8°C) | 519 | D6.8 (0.3) | D | D | O | O |
| 3—10 | 130 (54.5°C) | 519 | None | D | D | O | M |
| 3—11 | 130 (54.5°C) | 519 | D10.4 (2) | L | D | O | L |
| 3—12 | 130 (54.5°C) | 519 | D10.4 (1.0) | A | D | O | L |
| 3—13 | 130 (54.5°C) | 519 | D10.4 (0.5) | D | D | O | M |
| 3—14 | 130 (54.5°C) | 519 | D10.4 (0.3) | D | D | O | M |
| 3—15 | 130 (54.5°C) | 519 | D6.8 (2) | L | D | O | L |
| 3—16 | 130 (54.5°C) | 519 | D6.8 (1) | D | D | O | L |
| 3—17 | 130 (54.5°C) | 519 | D6.8 (0.5) | D | D | O | O |
| 3—18 | 130 (54.5°C) | 519 | D6.8 (0.3) | D | D | O | O |

## Example 4

The procedures described in Example 1 were repeated, the D—D mixture containing about 600 ppm moisture at a temperature of 43.3°C (110°F) for 53 days. The stabilisers used were: Plas-Chek 775 (P—775 in Table 4), an epoxidised soybean oil, oxirane oxygen content: 7.3%w; Plas-Chek 795

5

(P—795 in Table 4), an epoxidised linseed oil, oxirane oxygen content: 9.4%w; Admex 746 (A—746 in Table 4) an epoxidised tallate ester; Admex 711 (A—711 in Table 4), an epoxidised soybean oil, and Admex ELO (A—ELO in Table 4), an epoxidised linseed oil. The results are reported in Table 4.

Table 4

| | | | Solution Colour | | Rust Formation | |
|---|---|---|---|---|---|---|
| Test No | Stabiliser Code | %w | t=1 | t=56 | t=1 | t=56 |
| 4—1 | P—775 | 1.0 | L | D | O | O |
| 4—2 | P—795 | 1.0 | L | D | O | O |
| 4—3 | P—775 | 0.5 | L | D | O | O |
| 4—4 | P—795 | 0.5 | L | D | O | L |
| 4—5 | P—775 | 0.3 | L | D | O | L |
| 4—6 | P—795 | 0.3 | L | D | O | L |
| 4—7 | A—746 | 0.3 | A | D | O | L |
| 4—8 | A—711 | 0.3 | A | D | O | L |
| 4—9 | A—ELO | 0.3 | A | D | O | L |
| Control | None | | A | D | O | H |

The results of these tests show that these epoxides were approximately equivalent to the others, on an equal weight (rather than equivalent functionality) basis, except that they may be marginally less effective in stabilising colour.

Example 5

The procedures of Example 1 were repeated, in yet another sample of commercial D—D Soil Fumigant mixture, to which had been added enough water to provide a water concentration of 662 ppm. Temperature: 43.3°C (110°F). Duration of test: 61 days. The results are summarised in Table 5.

Table 5

| | | Solution Colour[a] | | | | Rust Formation[c] | |
|---|---|---|---|---|---|---|---|
| Test No. | Stabiliser Added Code—%w | t=0[b] | t=6 | t=41 | t=61 | t=0 | t=61 |
| 5—1 | None | A | A | D | D | O | O |
| 5—2 | Drapex 10.4 0.5 | A | L | D | D | O | O |
| 5—3 | Drapex 10.4 1.0 | A | L | L | L | O | O |
| 5—4 | Drapex 6.8 0.5 | A | L | D | D | O | O |
| 5—5 | Drapex 6.8 1.0 | A | L | D | D | O | O |

a) Colour gradient: L=light, pale straw colour; A=amber to transparent black; D=dark to black, opaque.

b) t=0, (examination at time of preparation).

c) Rust formation: O=none or trace.

Example 6

Tests were conducted to determine the effectiveness of Drapex 10.4 as a stabiliser for a mixture of D—D Soil Fumigant (85%) and chloropicrin (15%). These tests were conducted by placing samples of the mixture in 5-gallon steel containers lined with a modified epoxy phenolic resin. The atmosphere above the liquid surface in the containers was air. Water was added. 1.1% w of the epoxide was added. The tests were conducted at 48.8°C (120°F) {in one case 37.6°C (100°F)} for three weeks.

The results are summarised in Table 6.

**0017265**

Table 6

| Test No. | $H_2O$ ppm[a] | Test Period days | Storage Temp., °F | Additive, %w | Solution Colour[b] | Container Damage[c] |
|---|---|---|---|---|---|---|
| 6—1 | 317 | 0 | — | No | A | — |
| 6—1 | 317 | 21 | 120 (48.8°C) | No | D | B |
| 6—2 | 364 | 0 | — | Yes | L | — |
| 6—2 | 364 | 21 | 120 (48.8°C) | Yes | L | OK |
| 6—3 | 318 | 16 | 100 (37.6°C) | Yes | L | OK |

a) Analytical difficulties in determination of water in the presence of chloropicrin suggest that figures shown should be considered to be approximate.

b) L=light, pale straw colour, transparent; A=amber or brown to transparent black; D=dark to black, opaque.

c) OK=no visible change in appearance of lining; B=lining of pail showing evidence of blistering; colour change at liquid air interface.

In the stabilised formulations, there was no change in the composition (active ingredients) nor appearance of the product, the solution colour remained light amber and transparent (in contrast to some untreated samples which rapidly turned black and became opaque), and the container lining remained intact and unaffected. By contrast, D—D/PIC solutions (containing at least 0.03% w moisture) which were not stabilised had begun to attack the lining; the liquid-air interface showed the colour differences which developed and blistering of the lining also was observed.

## Claims

1. A soil fumigant composition comprising dichloropropene, optionally together with one or more related chlorinated alkane/alkene components and/or more other nematicides, and, as a stabilizer therefor, at least 0.2 percent, by weight thereof, of a non-nucleophilic, oleophilic aliphatic epoxide.

2. A composition according to Claim 1, wherein the epoxide is an epoxide of a naturally-occurring olefinically unsaturated material.

3. A composition according to Claim 2, wherein the epoxide is an epoxidised drying oil.

4. A composition according to Claim 3, wherein the epoxide is an epoxidised soybean oil.

5. A composition according to Claim 3, wherein the epoxide is an epoxidised linseed oil.

6. A composition according to any one of Claims 1—5, wherein the amount of said epoxide is 0.5 to 3 percent by weight thereof.

7. A method of stabilising 1,3-dichloropropene or 1,3-dichloropropene in admixture with one or more related chlorinated alkane/alkene components and/or one or more other nematicides, which comprises incorporating in the 1,3-dichloropropene or the admixture at least 0.2 percent, by weight thereof, of a non-nucleophilic, oleophilic aliphatic epoxide.

## Revendications

1. Composition pour la fumigation du sol, caractérisée en ce qu'elle comprend du dichloropropène, éventuellement en même temps qu'un ou plusieurs constituants alcanes/alcènes chlorés voisins et/ou un ou plusieurs autres nématicides et, comme stabilisant, au moins 0,2% en poids d'un époxyde aliphatique oléophile non-nucléophile.

2. Composition selon la revendication 1, caractérisée en ce que l'époxyde est un époxyde dérivé d'une matière oléfiniquement non-saturée existant dans la nature.

3. Composition selon la revendication 2, caractérisée en ce que l'époxyde est une huile siccative époxydée.

4. Composition selon la revendication 3, caractérisée en ce que l'époxyde est une huile de soja époxydée.

5. Composition selon la revendication 3, caractérisée en ce que l'époxyde est une huile de lin époxydée.

6. Composition selon l'une quelconque des revendications 1 à 5, caractérisée en ce que la quantité de l'époxyde est de 0,5 à 3 pour cent en poids.

7. Procédé pour la stabilisation de 1,3-dichloropropène ou de 1,3-dichloropropène en mélange avec un ou plusieurs constituants alcanes/alcènes chlorés voisins et/ou un ou plusieurs autres nématicides, caractérisé en ce qu'on incorpore dans le 1,3-dichloropropène ou dans le mélange au moins 0,2 pour cent en poids d'un époxyde aliphatique oléophile non-nucléophile.

# 0 017 265

**Patentansprüche**

1. Bodenvergasungszusammensetzung, enthaltend Dichlorpropen, gewünschtenfalls zusammen mit einem oder mehreren verwandten chlorierten Alkan/Alken-Komponenten und/oder anderen Nematiziden, und, als Stabilisator hierfür, mindestens 0,2%, bezogen auf das Gewicht hiervon, eines nicht-nukleophilen, oleophilen aliphatischen Epoxids.

2. Zusammensetzung nach Anspruch 1, dadurch gekennzeichnet, dass das Epoxid ein Epoxid eines natürlich vorkommenden olefinisch ungesättigten Materials ist.

3. Zusammensetzung nach Anspruch 2, dadurch gekennzeichnet, dass das Epoxid ein epoxidiertes trocknendes Öl ist.

4. Zusammensetzung nach Anspruch 3, dadurch gekennzeichnet, dass das Epoxid ein epoxidiertes Sojabohnenöl ist.

5. Zusammensetzung nach Anspruch 3, dadurch gekennzeichnet, dass das Epoxid ein epoxidiertes Leinsamenöl ist.

6. Zusammensetzung nach einem der Ansprüche 1 bis 5, dadurch gekennzeichnet, dass die Menge des genannten Epoxids 0,5 bis 3%, bezogen auf das Gewicht der Zusammensetzung, beträgt.

7. Verfahren zur Stabilisierung von 1,3-Dichlorpropen oder 1,3-Dichlorpropen im Gemisch mit einer oder mehreren verwandten chlorierten Alkan/Alken-Komponenten und/oder einem oder mehreren anderen Nematiziden, dadurch gekennzeichnet, dass in das 1,3-Dichlorpropen oder das Gemisch mindestens 0,2%, bezogen auf das Gewicht hiervon, eines nicht-nukleophilen, oleophilen aliphatischen Epoxids eingemischt wird.